# EUROPEAN PATENT SPECIFICATION

(11) **EP 0 687 964 B1**
(45) Date of publication and mention of the grant of the patent: **03.12.1997**
(21) Application number: 95107774.2
(22) Date of filing: 22.05.1995
(51) Int. Cl.: G05D 1/00, G05D 1/03

(54) **Programmable remote control system for a vehicle**
Programmierbare Fernsteuerung für ein Fahrzeug
Système de commande à distance programmable pour un véhicule

(30) Priority: 14.06.1994 IT PN940040
(43) Date of publication of application: 20.12.1995
(73) Proprietor: ZELTRON S.p.A., I-33030 Campoformido, Udine (IT)
(72) Inventor: Giordano, Roberto, I-33100 Udine (IT); Drius, Francesco, I-33052 Cervignano del Friuli, Udine (IT)
(74) Representative: Busca, Luciano

(56) References cited:
- EP-A- 0 267 181
- WO-A-87/01216
- ROBOTERSYSTEME, vol.8, no.3, 1992, BERLIN,DE pages 182 - 190, XP000297478 R.GUTSCHE ET AL 'MONAMOVE - Ein Navigations- und Überwachungssystem für fahrerlose Transportfahrzeuge in Fabrikationsumgebungen'

## Description

The present invention refers to an improved remote control system for a vehicle, which is capable of being easily programmed according to the actual requirements.

The term "vehicle" is used here to actually mean any type of controlled self-moving or self-propelled apparatus that is capable of being used to household, commercial or industrial purposes.

Remote control systems for vehicles are widely known in the art. The most simple ones among them include for instance a toy motor-car provided with a driving and steering servosystem which is radio-controlled, ie. remotely controlled by radio signals in a manual manner. The most advanced systems are on the other hand programmable in a fully automatic manner and, therefore, they do not require any operator to continuously ensure a supervision of the vehicle. This is for instance the case of a robot for industrial uses, which is adapted to be remotely controlled for travelling along relatively complex paths or routes according to a scheme that will have been pre-determined in accordance with the characteristics of the area in which the vehicle is due to operate.

For example, WO-A-87 01216 discloses a navigation system for detecting the position and controlling the movement of an automatically guided vehicle carrying a source of light to which a detector is responsive. A signal processing unit has memory means in which path control information corresponding to the path of the vehicle is stored, and comparator means adapted to compare the path control information stored in the memory means with positional information produced by the system, in order, when the path control information and the positional information differ, to emit control signals for the movement of the vehicle. As a result, the vehicle is automatically and accurately controlled to follow a predetermined path.

However, all these automatic systems require an undesirably complex and rather unflexible programming of the route which the vehicle is requested to cover, so that they do not appear to be fit for use in operational areas that are different from the one for which they have been originally programmed.

It is therefore a main purpose of the present invention to provide a programmable remote control system for a vehicle, which is simple and easily adaptable to the characteristics of different operational areas.

It is a further purpose of the present invention to provide a remote control system of the afore mentioned type which is capable of being set and programmed in an easy, flexible and substantially precise manner even by substantially unskilled persons.

It is a further purpose of the present invention to provide a remote control system of the afore mentioned kind, which is capable of enabling the vehicle to be continuously and effectively controlled so as to ensure a correct displacement of the same vehicle within its pre-determined operational area.

According to the present invention, all such aims are reached in a programmable remote control system for a vehicle, which includes the characteristics as recited in the appended claims.

The characteristics, features and advantages of the present invention will anyway become more apparent from the following description that is given by way of non-limiting example with reference to the accompanying drawings, in which:
- Figure 1 is a schematical view of a preferred embodiment of the remote control system according to the present invention;
- Figure 2 is a schematical view of a detail of the system illustrated in Figure 1; and
- Figure 3 is a flow-chart illustrating the general operation of the system appearing in Figure 1, with various selectable operational options;
- Figure 4 is a flow-chart illustrating in a more detailed manner the operation of the system for the guidance of the vehicle;
- Figure 5 is a flow-chart illustrating in a more detailed manner the operation of the system for controlling the position and locating the vehicle.

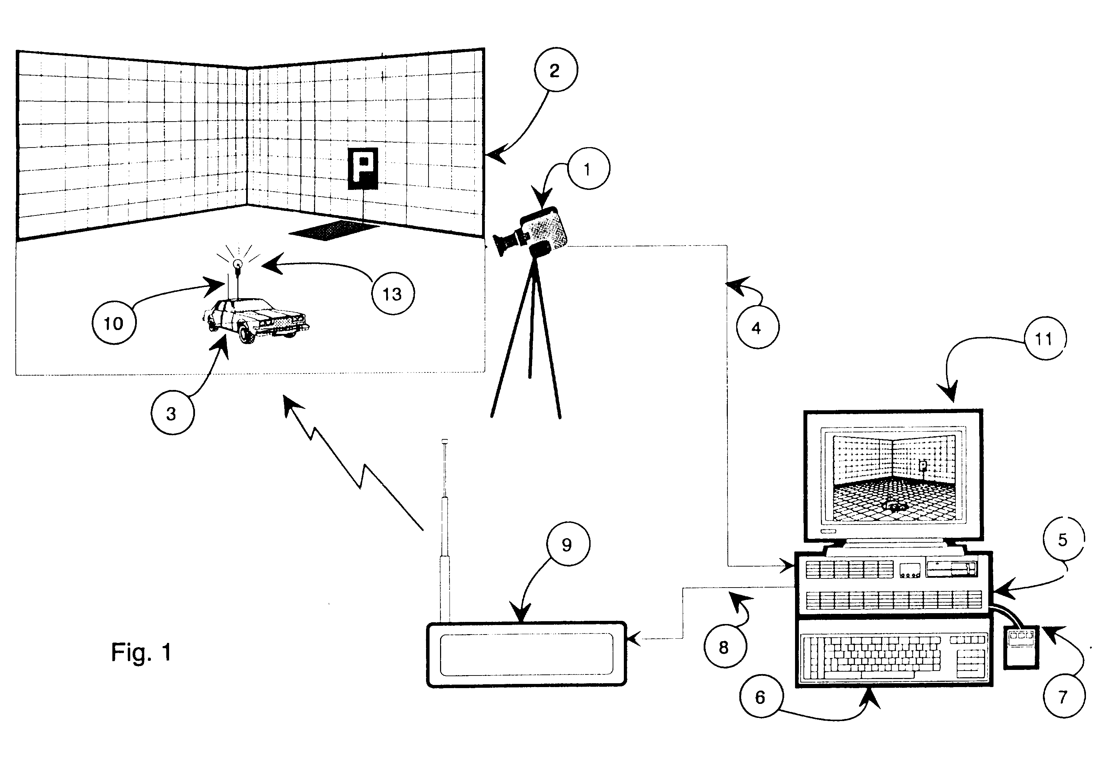

Referring in particular to Figure 1, it can be noticed that the system according to the present invention mainly comprises at least an artificial vision apparatus, such as a television camera 1, adapted to continuously sweep and pick-up the images of a given operational area 2 in which at least a vehicle 3 provided with own propulsion means, such as an electric motor, and own steering means is able to move around in a controlled manner. Said vehicle 3 can for instance be an industrial-type vacuum cleaner, a lawn mower, a robot or the like, and can be of a type that is capable of moving forward at different speeds, as well as moving backward and turning to the left and to the right in a controlled manner, wherein said propelling means and steering means are of a per se known kind, so that they will not be shown here for reasons of greater simplicity.

The operational area 2 can for instance be constituted by a rectangular or square place with the sides measuring approx. 10 m, while the television camera 1 can be situated in a position at a height of a few meters above the floor.

The television camera 1 can be of a type having a spectrum that extends to include infrared, such as for instance a television camera of the charge-coupled or CCD type marketed by WATEC under the model designation of TIN 304 R.

The output 4 of the television camera 1 uses an image signal, ie. a video signal representative of the area 2 and the vehicle 3, to drive a control unit that preferably comprises a personal computer 5. The latter can for instance be a AST 486 PREMMIA personal computer associated to command means such as a keyboard 6 and/or a so-called "mouse" 7, and comprises an output 8 that drives a remote-control transmitter 9.

Said transmitter 9 is adapted to remotely control, preferably by means of radio waves, a corresponding receiver 10 which is provided on the vehicle 3 and which is in turn adapted to control, in a substantially per se knwon manner, said propelling and steering means of said vehicle.

The remote control apparatus itself can for instance be of the FUTABA type, mod. F14.

The remote control system according to the present invention is in an advantageous manner of the closed-loop type, with the possibility of continuously monitoring and controlling, in the manner that will be described in greater detail farther on, the actual position of the vehicle 3 within the operational area 2. In particular, the television camera 1 acts as a feed-back means for the whole system.

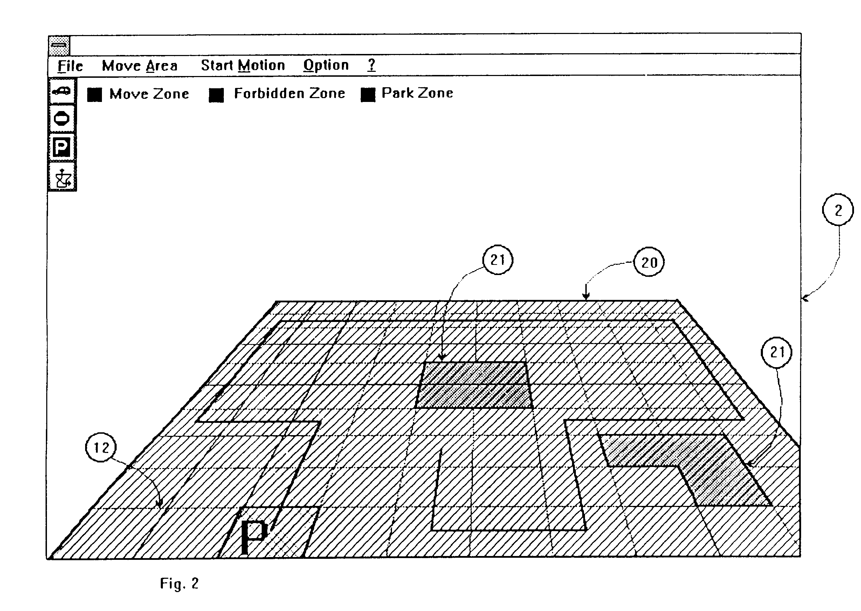

To the control unit 5 there is associated at least a monitor 11 , which is adapted to display an image (Figure 2) that corresponds to the operational area 3 being picked up by the television camera 1, along with possible information needed for programming commands to be performed or carried out by the vehicle 3.

In a per sè known manner, the personal computer 5 comprises an acquisition and processing board for video signals in digital form, as well as a so-called library software which, although not covered by the present invention, enables the system to be managed and the images to be processed by the personal computer in the manner that will be described farther on. For example, said video-signal acquisition and processing board comprises a board of the Frame Grabber type, mod. DT2867, as marketed by DATA TRANSLATION, whereas the output 8 of the control unit 5 is included in a digital output board as marketed by NATIONAL INSTRUMENT under the model designation DI024.

Two combinable programmes can be set on the personal computer for the operation of the system. In particular, a so-called range-setting or range-calibrating programme is set, through the keyboard 6 and/or the mouse 7, with the data concerning the ratio of the performance capabilities of the vehicle 3 (eg. the steering or turning radius) to the dimensions of the operational area 2. In a preferred manner, said range-calibrating programme also comprises data concerning the mesh pitch or size of a reference grid 12 (Figure 2) which is displayed on the monitor 11 as superimposed on the view of the operational area. In accordance with these data, the software of the personal computer 5, through appropriate metric transformations, will automatically adapt the dimensions of the image displayed on the monitor 11 to the dimensions of the real image, ie. the operational area 2 viewed by the television camera 1. The data of the range-calibrating programme are then stored in the personal computer 5 in view of their utilization as a reference by an operational programme. The range-calibrating programme shall only be changed in the case that some "geometric" variation occurs or takes place in the operational area, such as for instance a displacement of the television camera 1 to a different siting, a change of the operational area 2, etc.

The operational programme uses the stored data of the afore mentioned range-calibrating programme to enable the image picked up by the television camera 1 to be correspondingly displayed on the monitor 11, as well as so-called moving zones, possible forbidden zones and, if needed, a parking zone to be defined, as this will be better explained farther on.

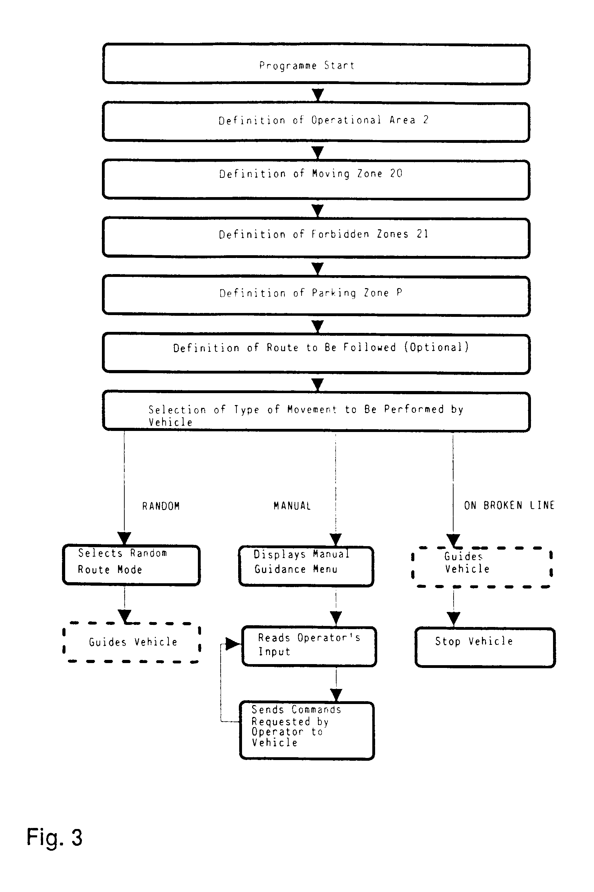

In a preferred manner, as shown in Figure 3, the range-calibrating programme and the operational programme can be set directly into a single combined programme. In any case, the system's software can be of any appropriate type fitting the particular purpose, is within the capabilities and the knowledge of those skilled in the art, and departs from the scope of the present invention, as already pointed out. It is quite apparent that setting the range-calibrating programme and the operational programme can be quite simply and readily performed, through the keyboard 6 and/or the mouse 7, even by substantially unskilled persons, who will in fact be only required to be able to operate an ordinary personal computer.

As far as the operational programme is concerned, the operator, through the keyboard 6 and/or the mouse 7, defines and stores the contours of at least a moving zone 20, which comprises at least a portion of the operational area 2 and within which the vehicle 3 is to move. As shown in Figure 2, said contours of the moving zone 20 are displayed on the monitor 11.

Similarly, the operator can define and store the contours of one or several forbidden zones 21, ie. zones through which the remotely controlled vehicle 3 is not allowed to pass. Said forbidden zones 21 are included in the moving zones 20. If the operational area 2 is for instance a garden monitored by the television camera 1, and the vehicle 3 comprises a lawn mower, the moving zone 20 represents at least a portion of the garden in which the vehicle 3 has to move while avoiding forbidden zones 21 that may be represented by trees, flower-beds and the like included within said moving zone 20.

Similarly to the moving zone 20 and the forbidden zones 21, the operator can further define also a parking zone P, which is also included in the moving zone 20 and preferably corresponds to a mesh of the grid 12. Also said parking zone P is correspondingly displayed on the monitor 11 in an accordingly coded manner.

The moving zone 20 and the forbidden zones 21 can be changed at discrete levels, corresponding to meshes of the grid 12. The latter can of course be or not be displayed on the monitor 11, depending on the relevant command imparted by the operator.

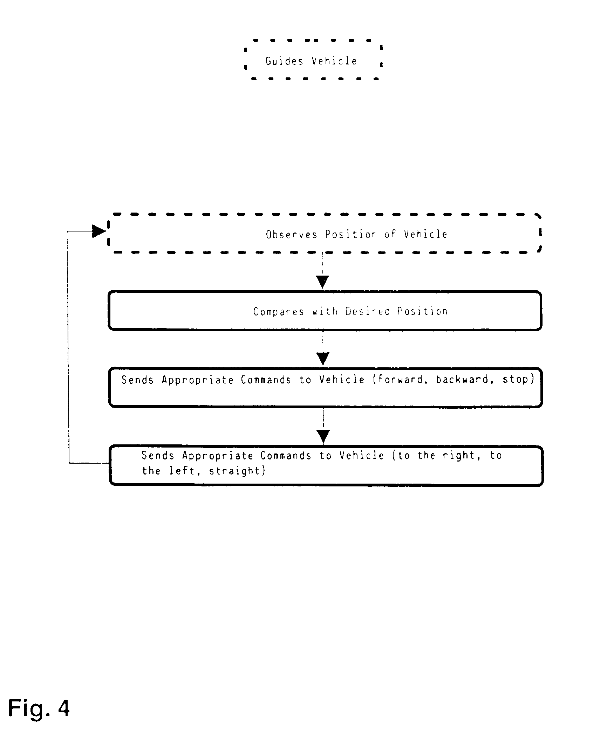

Once the range-calibrating programme and the operational programme have been set in the above described manner, the operator can act on the keyboard 6 to selectively start the operation of the system with a "random" movement of the vehicle 3, in accordance with the data stored in the personal computer 5. The output 8 of the control unit 5 drives thereupon the transmitter 9 with a driving signal, which is coded in a per sè known manner, according to the operational programme that has been set (Figures 3 and 4). The driving signal is transmitted by the transmitter 9 to the receiver 10 of the vehicle 3, which, when at rest, is preferably located in the parking zone P. Thereupon, said vehicle 3 moves out of the parking zone P and automatically follows such a route as to enable the same vehicle to substantially "scan" the moving zone 20 (through repeated actuation of its steering members) and move eventually back into the parking zone P, where the vehicle comes preferably to a standstill with a given orientation, according to the geometric characteristics (as set in the combined programme) of both the zone P and the moving zone 20.

When moving along its route, the vehicle 3 is caused to "bounce" in advance against the contours of the moving zone 20 and against the contours of the forbidden zones 21. In other words, that is, the vehicle 3 is guided so as to avoid moving beyond the contours of the above cited zones 20 and 21.

For a correct operation, the vehicle 3 is provided with coded optical recognition means, comprising for instance a lamp 13 or a similar light source, which is caused to uninterruptedly blink by the control unit 5 through the remote control 9, 10. Therefore, the video signal generated by the television camera 1 contains also a coded information that drives the personal computer with corresponding data concerning the actual instant position of the vehicle 3 within the operational area 2.

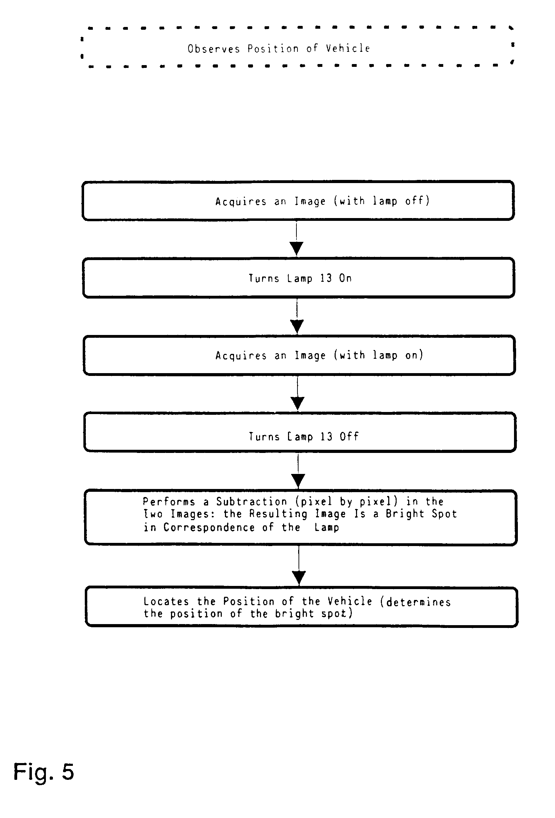

With reference also to Figure 5, the control unit 5 preferably uses the following procedure to effectively locate the actual position of the vehicle 3:
- the personal computer 5 acquires from the television camera 1 a video image with the lamp 13 off; it then issues the command for the same lamp to light up;
- the personal computer 5 acquires from the television camera 1 an image with the lamp 3 on; it then issues a command for the same lamp to turn off.

Such an operation continues in a cyclic manner and, using a *per sè* known technique, the personal computer 5 repeatedly performs a subtraction between the two above cited subsequent images, in a pixel-by-pixel manner, thereby obtaining a completely black digital image with a bright spot in correspondence of the lamp 13 and, as a consequence, of the vehicle 3. Such a resulting image is preferably displayed on the monitor 11 together with the area 2 and the zones 20, 21 and P.

In a manner which is generally known to those skilled in the art, the personal computer 5 is capable of automatically determine by calculation the geometric coordinates of the bright spot on the screen of the monitor corresponding to the instant position of the vehicle 3 within the operational area 2. As a result, the output 8 of the control unit 5 is able to continuously drive the vehicle 3 with error commands, through the remote control 9, 10, so as to perform the pre-set operational programme in a correct manner and with an adequate level of accuracy.

## Claims

1. Programmable remote control system for a vehicle (3) equipped with own propelling and steering means that are adapted to be controlled by means of remote control means (9, 10), said system comprising artificial vision means (1) adapted to pick up the images of an operational area (2), in which said vehicle is situated, and to drive with a corresponding video signal a computerized control unit (5) provided with command means (6, 7) for inputting and setting an operational programme according to which said control unit is capable of driving said remote control means and, as a result, controlling the movement of said vehicle (3), the latter being provided with coded optical recognition means (13) which the control unit (5) is adapted to detect so as to determine the instant position thereof and drive the vehicle with corresponding error signals, according to the operational programme, **characterized in that** the control unit (5) is arranged to store in the operational programme at least a moving zone (20) within which said vehicle (3) is controlled to move with a random movement, so as to substantially scan said moving zone (20).

2. Programmable remote control system according to claim 1, **characterized in that** the control unit (5) is arranged to store in the operational programme at least a forbidden zone (21) which the vehicle is controlled to avoid during its random movement in said moving zone (20).

3. Programmable remote control system according to claim 1, **characterized in that** the control unit (5) is arranged to store in the operational programme a parking zone (P) in which said vehicle (3) is controlled to stay at the end of its random movement in said moving zone (20).

## Patentansprüche

1. Programmierbare Fernsteuerung für ein Fahrzeug (3), welches mit eigenen Antriebs- und Steuereinrichtungen versehen ist, die so gestaltet sind, daß sie mittels der Fernsteuerung (9, 10) betätigt werden können, wobei das System eine technische Erfassungseinrichtung (1) umfaßt, welche in der Lage ist, die Ansicht eines Arbeitsbereiches (2) zu erfassen, innerhalb welchem sich das Fahrzeug befindet, und mit einem entsprechenden Videosignal eine computergestützte Steuereinrichtung (5) zu betreiben, die mit Befehlseinrichtungen (6, 7) zur Eingabe und zum Abspeichern eines Funktionsprogrammes versehen ist, mit welchem die Steuereinrichtung in der Lage ist, die Fernsteuerung zu betreiben, und dadurch die Bewegung des Fahrzeuges (3) zu steuern, wobei letzteres mit einer codierten optischen Signaleinrichtung (13) ausgestattet ist, welche von der Steuereinrichtung (5) erkannt werden kann, so daß sie die augenblickliche Position von diesem ermitteln und das Fahrzeug durch Fehlersignale steuern kann, die durch Vergleich mit dem Funktionsprogramm ermittelt werden, **dadurch gekennzeichnet,** daß die Steuereinrichtung (5) so gestaltet ist, daß sie im Funktionsprogramm zumindest einen Bewegungsbereich (20) speichert, in welchem das Fahrzeug (3) mit einer beliebigen Bewegung gesteuert bewegt wird, so daß es im wesentlichen den Bewegungsbereich (20) abfährt.

2. Programmierbare Fernsteuerung nach Anspruch 1, **dadurch gekennzeichnet,** daß die Steuereinrichtung (5) so gestaltet ist, daß sie im Funktionsprogramm zumindest einen unerlaubten Bereich (21) speichert, welchen das Fahrzeug bei seiner beliebigen Bewegung im Bewegungsbereich (20) gesteuert meidet.

3. Programmierbare Fernsteuerung nach Anspruch 1, **dadurch gekennzeichnet,** daß die Steuereinrichtung (5) so gestaltet ist, daß sie im Funktionsprogramm einen Parkbereich (P) speichert, in welchem das Fahrzeug (3) am Ende seiner beliebigen Bewegung im Bewegungsbereich (20) gesteuert verweilt.

## Revendications

1. Système de commande à distance programmable pour un véhicule (**3**) équipé de ses propres moyens de propulsion et de direction qui sont adaptés pour être commandés par des moyens de commande à distance (**9, 10**), ledit système comprenant des moyens de vision artificielle (**1**) adaptés pour prélever les images d'une zone opérationnelle (**2**) dans laquelle est situé ledit véhicule, et pour entraîner avec un signal vidéo correspondant une unité de commande informatisée (**5**), munie de moyens de commande (**6, 7**) pour entrer et définir un programme opérationnel selon lequel ladite unité de commande est capable d'entraîner lesdits moyens de commande à distance et, en conséquence, de contrôler le mouvement dudit véhicule (**3**), ce dernier étant muni de moyens de reconnaissance optique codés (**13**) que l'unité de commande (**5**) est adapté à détecter, afin de déterminer la position instantanée de celui-ci et d'entraîner le véhicule avec des signaux d'erreur correspondants, selon le programme opérationnel, caractérisé en ce que l'unité de commande (**5**) est agencée pour mémoriser dans le programme opérationnel au moins une zone de déplacement (**20**) dans laquelle ledit véhicule (**3**) est contrôlé à se déplacer avec un mouvement aléatoire, de manière à balayer sensiblement ladite zone de déplacement (**20**).

2. Système de commande à distance programmable selon la revendication 1, caractérisé en ce que l'unité de commande (**5**) est agencée pour mémoriser dans le programme opérationnel au moins une zone interdite (**21**) que le véhicule est contrôlé à éviter pendant son mouvement aléatoire dans ladite zone de déplacement **(20).**

3. Système de commande à distance programmable selon la revendication 1, caractérisé en ce que l'unité de commande (**5**) est agencée pour mémoriser dans le programme opérationnel une zone de stationnement (**P**) dans laquelle ledit véhicule (**3**) est contrôlé pour rester au terme de son mouvement aléatoire dans ladite zone de déplacement (**20**).
